(19) Europäisches Patentamt
European Patent Office
Office européen des brevets

(11) **EP 4 511 890 B1**

(12) **EUROPEAN PATENT SPECIFICATION**

(45) Date of publication and mention of the grant of the patent:
**03.06.2026 Bulletin 2026/23**

(21) Application number: **23714776.4**

(22) Date of filing: **11.04.2023**

(51) International Patent Classification (IPC):
***H01M 4/131*** *(2010.01)* ***H01M 4/1391*** *(2010.01)*
***H01M 4/36*** *(2006.01)* ***H01M 4/485*** *(2010.01)*
***H01M 4/505*** *(2010.01)* ***H01M 4/525*** *(2010.01)*
***H01M 4/62*** *(2006.01)* ***H01M 10/052*** *(2010.01)*

(52) Cooperative Patent Classification (CPC):
**H01M 4/131; H01M 4/1391; H01M 4/364; H01M 4/485; H01M 4/505; H01M 4/525; H01M 4/625; H01M 10/052;** Y02E 60/10

(86) International application number:
**PCT/EP2023/059398**

(87) International publication number:
**WO 2023/202912 (26.10.2023 Gazette 2023/43)**

(54) **CATHODE ACTIVE MATERIALS, THEIR MANUFACTURE AND THEIR USE**

AKTIVE KATHODENMATERIALIEN, IHRE HERSTELLUNG UND IHRE VERWENDUNG

MATÉRIAUX ACTIFS DE CATHODE, LEUR FABRICATION ET LEUR UTILISATION

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **19.04.2022 EP 22168748**

(43) Date of publication of application:
**26.02.2025 Bulletin 2025/09**

(73) Proprietor: **BASF SE**
**67056 Ludwigshafen am Rhein (DE)**

(72) Inventors:
- **KIM, Young Jin**
**Beachwood, Ohio 44122 (US)**
- **HAAG, Jacob**
**Beachwood, Ohio 44122 (US)**

(74) Representative: **BASF IP Association**
**BASF SE**
**GBI - Z078**
**67056 Ludwigshafen (DE)**

(56) References cited:
**US-A1- 2014 377 659** **US-A1- 2022 052 336**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 511 890 B1

## Description

The present invention is direct to a process for making an electrode active material for lithium-ion batteries wherein said process comprises the steps of:

(a) Providing a cathode active material (α) that has the general formula $Li_{1+x1}TM_{1-x1}O_2$ wherein TM is a combination of metals according to general formula (I), and x1 is in the range of from 0.05 to 0.3, and wherein cathode active material (α) has a pressed density in the range of from 2.85 to 3.1 g/cm$^3$, determined at 250 MPa,

(b) providing another cathode active material (β) that has the general formula $Li_{1+x2}TM_{1-x2}O_2$ wherein TM is a combination of metals according to general formula (I), and wherein TM in cathode material (α) and cathode active material (β) may be identical or different, and x2 is in the range of from 0.05 to 0.3, and wherein cathode active material (β) has a pressed density in the range of from 2.50 to 2.80 g/cm$^3$, determined at 250 MPa,

(c) combining cathode active material (α) and cathode active material (β) in a mass ratio in the range of from 1:5 to 5:1,

$$(Ni_aCo_bMn_c)_{1-d}M^1_d \qquad (I),$$

the variables being defined below.

In addition, the present invention is directed towards cathode active materials and their use.

Lithiated transition metal oxides are currently being used as electrode active materials for lithium-ion batteries. Extensive research and developmental work has been performed in the past years to improve properties like charge density, specific energy, but also other properties like the reduced cycle life and capacity loss that may adversely affect the lifetime or applicability of a lithium-ion battery. Additional effort has been made to improve manufacturing methods.

Many electrode active materials discussed today are of the type of lithiated nickel-cobalt-manganese oxide ("NCM materials") or lithiated nickel-cobalt-aluminum oxide ("NCA materials").

In a typical process for making cathode materials for lithium-ion batteries, first a so-called precursor is being formed by co-precipitating the transition metals as carbonates, oxides or preferably as hydroxides that may or may not be basic. The precursor is then mixed with a source of lithium - a lithium compound - such as, but not limited to LiOH, $Li_2O$ or - especially - $Li_2CO_3$ - and calcined (fired) at high temperatures. Lithium compound(s) can be employed as hydrate(s) or in dehydrated form. The calcination - or firing - generally also referred to as thermal treatment or heat treatment of the precursor - is usually carried out at temperatures in the range of from 600 to 1000 °C. During the thermal treatment a reaction takes place, and the electrode active material is formed. In cases hydroxides or carbonates are used as precursors the lithiation reaction follows a removal of water or carbon dioxide. The thermal treatment is performed in the heating zone of an oven or kiln.

Extensive research has been performed on improvement of various properties of cathode active materials, such as energy density, charge-discharge performance such as capacity fading, and the like. However, many cathode active materials suffer from limited cycle life and voltage fade. This applies particularly to many Mn-rich cathode active materials.

In EP 3 486 980, specific high-manganese materials with a high energy density retention rate are disclosed. However, the cathode active materials disclosed suffer from a limited energy density as such.

In WO 2021/037678, a cathode active material with improved energy density is disclosed that still leaves room for improvement.

It was therefore an objective of the present invention to provide cathode active materials with both a high energy density and a high energy density retention rate. It was further an objective to provide a process for making cathode active materials with both a high energy density and a high energy density retention rate. It was further an objective to provide applications of cathode active materials with both a high energy density and a high energy density retention rate.

Accordingly, the process defined at the outset has been found, hereinafter also referred to as "inventive process". The inventive process comprises at least three steps, step (a), step (b) and step (c). Said steps are described in more detail below.

Step (a) includes providing a cathode active material (α) that may hereinafter also briefly be referred to as (α) and that has the general formula $Li_{1+x1}TM_{1-x1}O_2$ wherein TM corresponds to metals of which at least 60 mol-% is manganese, and x1 is in the range of from 0.05 to 0.3, preferably 0.1 to 0.2, and wherein cathode active material (α) has a pressed density in the range of from 2.85 to 3.1 g/cm$^3$, determined at 250 MPa, preferably 2.95 to 3.10 g/cm$^3$.

The variable TM in cathode active materials (α) corresponds to metals, preferably transition metals according to general formula (I), preferably 60 to 70 mol-%. In one embodiment of the present invention, TM in cathode active materials (α) corresponds to a combination of manganese and nickel or a combination of manganese and nickel and cobalt with at least 60 mol-% being manganese and more nickel than cobalt.

Cathode active material (α) may be made by making a precursor that is an (oxy)hydroxide of TM or of TM', wherein TM is as defined above and TM' corresponds to TM but lacking any elements like $M^1$, see below, followed by mixing with a source of lithium and, if applicable, with a compound of $M^1$ and subsequent calcination. For the manufacture of (α), one or more post-treatment steps may follow, for example washing with water or a coating step.

Step (b) includes providing a cathode active material (β) that may hereinafter also briefly be referred to as (β) and that has the general formula $Li_{1+x2}TM_{1-x2}O_2$ wherein TM corresponds to a combination of metals according to general formula (I), and x2 is in the range of from 0.05 to 0.3, preferably 0.1 to 0.2, and wherein cathode active material (α) has a pressed density in the range of from 2.50 to 2.80 g/cm$^3$, determined at 250 MPa, preferably 2.6 to 2.8 g/cm$^3$.

Cathode active material (β) may be made by making a precursor that is a carbonate of TM or of TM', wherein TM is as defined above and TM' corresponds to TM but lacking any elements like $M^1$, see below, followed by mixing with a source of lithium and, if applicable, with a compound of $M^1$ and subsequent calcination. For the manufacture of (β), one or more post-treatment steps may follow, for example washing with water or a coating step.

In one embodiment of the present invention, TM in cathode active materials (α) and (β) are substantially the same, that means that the maximum deviation of constituents like manganese, nickel and - if present - cobalt is 0.5 mol-%, referring to the respective constituent.

In an alternative embodiment of the present invention, TM in cathode active materials (α) and (β) are different. For example, TM in cathode active material (β) may contain cobalt but TM in cathode active material (α) does not.

TM in both cathode active material (α) and cathode active material (β) is a combination of metals according to general formula (I)

$$(Ni_aCo_bMn_c)_{1-d}M^1_d \qquad (I)$$

wherein

- a is in the range of from 0.30 to 0.38,
- b being in the range of from zero to 0.05, and preferably, b is zero in at least one of cathode active material (α) and cathode active material (β),
- c is in the range of from 0.60 to 0.70, and
- d is in the range of from zero to 0.05,
- $M^1$ is selected from Al, Ti, Zr, W, Mo, Mg, B, and combinations of at least two of the foregoing,

$$a + b + c = 1.$$

Some elements are ubiquitous. In the context of the present invention, traces of ubiquitous metals such as sodium, calcium, iron or zinc, as impurities will not be taken into account in the description of the present invention. Traces in this context will mean amounts of 0.02 mol-% or less, referring to the total metal content of TM. Traces of sulfate are neglected as well.

In one embodiment of the present invention cathode active material (α) has an average particle diameter (D50) in the range of from 3 to 20 μm, preferably from 4 to 7 μm. The average particle diameter can be determined, e. g., by light scattering or LASER diffraction. The particles are usually composed of agglomerates from primary particles, and the above particle diameter refers to the secondary particle diameter.

In one embodiment of the present invention cathode active material (β) has an average particle diameter (D50) in the range of from 3 to 20 μm, preferably from 4 to 7 μm. The average particle diameter can be determined, e. g., by light scattering or LASER diffraction. The particles are usually composed of agglomerates from primary particles, and the above particle diameter refers to the secondary particle diameter.

In one embodiment of the present invention, cathode active material (β) has a larger average secondary particle diameter (D50) than cathode active material (α), for example by 0.5 to 3 μm. In a preferred embodiment, both cathode active material (β) and cathode active material (α) have the same average secondary particle diameter (D50), with ± 0.1 μm difference being considered as the same average particle diameter.

In one embodiment of the present invention, cathode active material (α) has a specific surface, hereinafter also "BET surface" in the range of from 1.0 to 7.0 m$^2$/g. The BET surface may be determined by nitrogen adsorption after outgassing of the sample at 200 °C for 30 minutes or more and beyond this accordance with DIN ISO 9277:2010.

In one embodiment of the present invention, cathode active material (β) has a specific surface, hereinafter also "BET surface" in the range of from 1.0 to 7.0 m$^2$/g. The BET surface may be determined by nitrogen adsorption after outgassing of the sample at 200 °C for 30 minutes or more and beyond this accordance with DIN ISO 9277:2010. Preferably, the BET surface of cathode active material (β) is larger than the BET surface of the respective cathode active material (α).

$M^1$ may be dispersed homogeneously or unevenly in particles of cathode active material (α) and cathode active

material (β). Preferably, $M^1$ is distributed unevenly in particles of (α) and (β), even more preferably as a gradient, with the concentration of $M^1$ in the outer shell being higher than in the center of the particles.

In one embodiment of the present invention, both cathode active material (α) and cathode active material (β) are comprised of spherical particles, that are particles have a spherical shape. Spherical particles shall include not just those which are exactly spherical but also those particles in which the maximum and minimum diameter of at least 90% (number average) of a representative sample differ by not more than 10%.

In one embodiment of the present invention, both cathode active material (α) and cathode active material (β) are comprised of secondary particles that are agglomerates of primary particles. Preferably, inventive material is comprised of spherical secondary particles that are agglomerates of primary particles. Even more preferably, (α) and (β) are each comprised of spherical secondary particles that are agglomerates of platelet primary particles.

In one embodiment of the present invention, said primary particles of (α) and (β) have an average diameter in the range from 1 to 2000 nm, preferably from 10 to 1000 nm, particularly preferably from 50 to 500 nm. The average primary particle diameter can, for example, be determined by "SEM", scanning electron microscopy, or "TEM", transmission electron microscopy.

In one embodiment of the present invention, cathode active material provided in step (a) has been treated with aqueous mineral acid, preferably with $H_2SO_4$.

The treatment with aqueous mineral acid, preferably with aqueous $H_2SO_4$ may be performed by adding the mineral acid to the cathode active material to be provided in step (a) and allowing the resultant slurry to interact. Such interaction may be enhanced by stirring.

In one embodiment of the present invention, step (d) is performed at a temperature in the range of from 5 to 85°C, preferred are 10 to 60°C. Ambient temperature is particularly preferred.

In one embodiment of the present invention, treatment with mineral acid is performed at normal pressure. It is preferred, though, to perform said treatment under elevated pressure, for example at 10 mbar to 10 bar above normal pressure, or with suction, for example 50 to 250 mbar below normal pressure, preferably 100 to 200 mbar below normal pressure.

In one embodiment of the present invention, treatment with mineral acid is performed in a filter device with stirrer, for example a pressure filter with stirrer or a suction filter with stirrer.

The duration of treatment with mineral acid with mineral acid may be in the range of from 2 to 60 minutes, preferred are 10 to 45 minutes.

In one embodiment of the present invention, the volume ratio of cathode active material to mineral acid or solution of compound of $M^1$, respectively, is in the range of from 1:1 to 1:10, preferably 1:1 to 1:5.

After said treatment, the mineral acid is removed by a solid-liquid separation step, e.g., by filtration, followed by drying at a temperature of from 100 to 150°C. Said drying may be performed under reduced pressure or even in vacuo.

As a result of the above treatment, the lithium content is lowered and the BET surface is raised.

In one embodiment of the present invention, cathode active material (β) is coated with a layer containing $Al_2O_3$ or a Li-Al oxide compound, for example $LiAlO_2$. Said coating may be homogeneous or non-homogeneous, for example, said coating may have an "island structure" and be incomplete. The coating is preferably quite thin. For example, it may have an average thickness in the range of from 1 nm to 10 nm. In other embodiments, said coating may have an average thickness in the range of from 12 to 50 nm.

In step (c), cathode active material (α) and cathode active material (β) are combined in a mass ratio in the range of from 1:5 to 5:1, preferably 1:4 to 3:2. Said combining is preferably performed by mixing cathode active material (α) and cathode active material (β) until they form a homogeneously looking powder mix as determined by the naked eye.

Step (c) may be performed in the presence of a solvent in order to avoid dusting, or in the absence. On laboratory scale, performing step (c) in a mortar with pestle and in the absence of a solvent is preferred.

On a kilogram scale or more, it is possible to use a solvent, for example N-ethyl-pyrrolidone, N-methyl pyrrolidone ("NMP"), DMSO, or DMF (dimethyl formamide). However, before further use for making a cathode, it is then preferred to remove such solvent and to thermally treat the resultant mixture, for example at 120 to 150°C, or to use the solvent that is used for electrode manufacture, for example NMP.

Step (c) may be performed in a blender or a tumble mixer, for example in a high-speed mixer. If performed on gram scale, a mortar with pestle is suitable as well.

Step (c) may be performed at any temperature from -20 to +120°C but ambient temperature is preferred. The pressure at which step (c) is performed is not critical but ambient pressure is preferred for simplicity reasons.

The duration of step (c) may be in the range of from 5 minutes to 5 hours and depends on the scale. Smaller quantities need less time while multi-kilogram scale or even ton scale of cathode active materials (α) and (β) may require 10 to 30 minutes or 30 minutes to 5 hours, respectively.

By carrying out the inventive process, mixtures are obtained with excellent electrochemical properties, for example high energy density and a good charge discharge performance and a low capacity fade.

Another aspect of the present invention refers to mixtures that may be used for making cathodes for lithium-ion

batteries. They are hereinafter also referred to as inventive mixtures or mixtures according to the present invention. Inventive mixtures comprise

($\alpha$) a cathode active material ($\alpha$) that has the general formula $Li_{1+x1}TM_{1-x1}O_2$ wherein TM corresponds to metals of which at least 60 mol-% is manganese, and x1 is in the range of from 0.05 to 0.3, preferably 0.1 to 0.2, and wherein cathode active material ($\alpha$) has a pressed density in the range of from 2.85 to 3.1 g/cm$^3$, determined at 250 MPa, preferably 2.95 to 3.10 g/cm$^3$, and

($\beta$) a cathode active material ($\beta$) that has the general formula $Li_{1+x2}TM_{1-x2}O_2$ wherein TM corresponds to metals of which at least 60 mol-% is manganese, and wherein TM in cathode material ($\alpha$) and cathode active material ($\beta$) may be identical or different, and x2 is in the range of from 0.05 to 0.3, preferably 0.1 to 0.2, and wherein cathode active material ($\beta$) has a pressed density in the range of from 2.50 to 2.80 g/cm$^3$, determined at 250 MPa, preferably 2.6 to 2.8 g/cm$^3$,

in a weight ratio in the range of from 1:5 to 5:1, preferably 1:5 to 5:1.

They may be obtained according to the inventive process, and they show excellent electrochemical properties, for example high energy density and a good charge discharge performance and a low capacity fade.

In one embodiment of the present invention, TM in cathode active materials ($\alpha$) and ($\beta$) are substantially the same, that means that the maximum deviation of constituents like manganese, nickel and - if present - cobalt is 0.5 mol-%, referring to the respective constituent.

In an alternative embodiment of the present invention, TM in cathode active materials ($\alpha$) and ($\beta$) are different. For example, TM in cathode active material ($\beta$) may contain cobalt but TM in cathode active material ($\alpha$) does not.

TM in both cathode active material ($\alpha$) and cathode active material ($\beta$) is a combination of metals according to general formula (I)

$$(Ni_aCo_bMn_c)_{1-d}M^1_d \qquad (I)$$

wherein

a is in the range of from 0.30 to 0.38,
b being in the range of from zero to 0.05, and preferably, b is zero in at least one of cathode active material ($\alpha$) and cathode active material ($\beta$),
c is in the range of from 0.60 to 0.70, and
d is in the range of from zero to 0.05,
$M^1$ is selected from Al, Ti, Zr, W, Mo, Mg, B, and combinations of at least two of the foregoing,

$$a + b + c = 1.$$

Some elements are ubiquitous. In the context of the present invention, traces of ubiquitous metals such as sodium, calcium, iron or zinc, as impurities will not be taken into account in the description of the present invention. Traces in this context will mean amounts of 0.02 mol-% or less, referring to the total metal content of TM. Traces of sulfate are neglected as well.

In one embodiment of the present invention cathode active material ($\alpha$) has an average particle diameter (D50) in the range of from 3 to 20 $\mu$m, preferably from 4 to 7 $\mu$m. The average particle diameter can be determined, e. g., by light scattering or LASER diffraction. The particles are usually composed of agglomerates from primary particles, and the above particle diameter refers to the secondary particle diameter.

In one embodiment of the present invention cathode active material ($\beta$) has an average particle diameter (D50) in the range of from 3 to 20 $\mu$m, preferably from 4 to 7 $\mu$m. The average particle diameter can be determined, e. g., by light scattering or LASER diffraction. The particles are usually composed of agglomerates from primary particles, and the above particle diameter refers to the secondary particle diameter.

In one embodiment of the present invention, cathode active material ($\beta$) has a larger average secondary particle diameter (D50) than cathode active material ($\alpha$), for example by 0.5 to 3 $\mu$m. In a preferred embodiment, both cathode active material ($\beta$) and cathode active material ($\alpha$) have the same average secondary particle diameter (D50), with $\pm$ 0.1 $\mu$m difference being considered as the same average particle diameter.

In one embodiment of the present invention, cathode active material ($\alpha$) has a specific surface, hereinafter also "BET surface" in the range of from 1.0 to 7.0 m$^2$/g. The BET surface may be determined by nitrogen adsorption after outgassing of the sample at 200 °C for 30 minutes or more and beyond this accordance with DIN ISO 9277:2010.

In one embodiment of the present invention, cathode active material ($\beta$) has a specific surface, hereinafter also

"BET surface" in the range of from 1.0 to 7.0 $m^2/g$. The BET surface may be determined by nitrogen adsorption after outgassing of the sample at 200 °C for 30 minutes or more and beyond this accordance with DIN ISO 9277:2010. Preferably, the BET surface of cathode active material ($\beta$) is larger than the BET surface of the respective cathode active material ($\alpha$).

$M^1$ may be dispersed homogeneously or unevenly in particles of cathode active material ($\alpha$) and cathode active material ($\beta$). Preferably, $M^1$ is distributed unevenly in particles of ($\alpha$) and ($\beta$), even more preferably as a gradient, with the concentration of $M^1$ in the outer shell being higher than in the center of the particles.

In one embodiment of the present invention, both cathode active material ($\alpha$) and cathode active material ($\beta$) are comprised of spherical particles, that are particles have a spherical shape. Spherical particles shall include not just those which are exactly spherical but also those particles in which the maximum and minimum diameter of at least 90% (number average) of a representative sample differ by not more than 10%.

In one embodiment of the present invention, both cathode active material ($\alpha$) and cathode active material ($\beta$) are comprised of secondary particles that are agglomerates of primary particles. Preferably, inventive material is comprised of spherical secondary particles that are agglomerates of primary particles. Even more preferably, ($\alpha$) and ($\beta$) are each comprised of spherical secondary particles that are agglomerates of platelet primary particles.

In one embodiment of the present invention, said primary particles of ($\alpha$) and ($\beta$) have an average diameter in the range from 1 to 2000 nm, preferably from 10 to 1000 nm, particularly preferably from 50 to 500 nm. The average primary particle diameter can, for example, be determined by "SEM", scanning electron microscopy, or "TEM", transmission electron microscopy.

A further aspect of the present invention refers to electrodes comprising at least one mixture according to the present invention. They are particularly useful for lithium-ion batteries. Lithium-ion batteries comprising at least one electrode according to the present invention exhibit a good discharge behavior. Electrodes comprising at least one mixture according to the present invention are hereinafter also referred to as inventive cathodes or cathodes according to the present invention.

Specifically, inventive cathodes contain

(A) at least one inventive mixture,
(B) carbon in electrically conductive form,
(C) a binder material, also referred to as binders or binders (C), and, preferably,
(D) a current collector.
(

In a preferred embodiment, inventive cathodes contain

(A) 80 to 98 % by weight inventive mixture,
(B) 1 to 17 % by weight of carbon,
(C) 1 to 15 % by weight of binder material,

percentages referring to the sum of (A), (B) and (C).

Cathodes according to the present invention can comprise further components. They can comprise a current collector, such as, but not limited to, an aluminum foil. They can further comprise conductive carbon and a binder.

Cathodes according to the present invention contain carbon in electrically conductive modification, in brief also referred to as carbon (B). Carbon (B) can be selected from soot, active carbon, carbon nanotubes, graphene, and graphite, and from combinations of at least two of the foregoing.

Suitable binders (C) are preferably selected from organic (co)polymers. Suitable (co)polymers, i.e. homopolymers or copolymers, can be selected, for example, from (co)polymers obtainable by anionic, catalytic or free-radical (co) polymerization, especially from polyethylene, polyacrylonitrile, polybutadiene, polystyrene, and copolymers of at least two comonomers selected from ethylene, propylene, styrene, (meth)acrylonitrile and 1,3-butadiene. Polypropylene is also suitable. Polyisoprene and polyacrylates are additionally suitable. Particular preference is given to polyacrylonitrile.

In the context of the present invention, polyacrylonitrile is understood to mean not only polyacrylonitrile homopolymers but also copolymers of acrylonitrile with 1,3-butadiene or styrene. Preference is given to polyacrylonitrile homopolymers.

In the context of the present invention, polyethylene is not only understood to mean homopoly-ethylene, but also copolymers of ethylene which comprise at least 50 mol-% of copolymerized ethylene and up to 50 mol-% of at least one further comonomer, for example $\alpha$-olefins such as propylene, butylene (1-butene), 1-hexene, 1-octene, 1-decene, 1-dodecene, 1-pentene, and also isobutene, vinylaromatics, for example styrene, and also (meth)acrylic acid, vinyl acetate, vinyl propionate, $C_1$-$C_{10}$-alkyl esters of (meth)acrylic acid, especially methyl acrylate, methyl methacrylate, ethyl acrylate, ethyl methacrylate, n-butyl acrylate, 2-ethylhexyl acrylate, n-butyl methacrylate, 2-ethylhexyl methacrylate, and also

maleic acid, maleic anhydride and itaconic anhydride. Polyethylene may be HDPE or LDPE.

In the context of the present invention, polypropylene is not only understood to mean homo-polypropylene, but also copolymers of propylene which comprise at least 50 mol-% of copolymerized propylene and up to 50 mol-% of at least one further comonomer, for example ethylene and $\alpha$-olefins such as butylene, 1-hexene, 1-octene, 1-decene, 1-dodecene and 1-pentene. Polypropylene is preferably isotactic or essentially isotactic polypropylene.

In the context of the present invention, polystyrene is not only understood to mean homopolymers of styrene, but also copolymers with acrylonitrile, 1,3-butadiene, (meth)acrylic acid, $C_1$-$C_{10}$-alkyl esters of (meth)acrylic acid, divinylbenzene, especially 1,3-divinylbenzene, 1,2-diphenylethylene and $\alpha$-methylstyrene.

Another preferred binder (C) is polybutadiene.

Other suitable binders (C) are selected from polyethylene oxide (PEO), cellulose, carboxymethylcellulose, polyimides and polyvinyl alcohol.

In one embodiment of the present invention, binder (C) is selected from those (co)polymers which have an average molecular weight $M_w$ in the range from 50,000 to 1,000,000 g/mol, preferably to 500,000 g/mol.

Binder (C) may be selected from cross-linked or non-cross-linked (co)polymers.

In a particularly preferred embodiment of the present invention, binder (C) is selected from halogenated (co) polymers, especially from fluorinated (co)polymers. Halogenated or fluorinated (co)polymers are understood to mean those (co)polymers which comprise at least one (co)polymerized (co)monomer which has at least one halogen atom or at least one fluorine atom per molecule, more preferably at least two halogen atoms or at least two fluorine atoms per molecule. Examples are polyvinyl chloride, polyvinylidene chloride, polytetrafluoroethylene, polyvinylidene fluoride (PVdF), tetrafluoroethylene-hexafluoropropylene copolymers, vinylidene fluoride-hexafluoropropylene copolymers (PVdF-HFP), vinylidene fluoride-tetrafluoroethylene copolymers, perfluoroalkyl vinyl ether copolymers, ethylene-tetrafluoroethylene copolymers, vinylidene fluoride-chlorotrifluoroethylene copolymers and ethylene-chlorofluoroethylene copolymers.

Suitable binders (C) are especially polyvinyl alcohol and halogenated (co)polymers, for example polyvinyl chloride or polyvinylidene chloride, especially fluorinated (co)polymers such as polyvinyl fluoride and especially polyvinylidene fluoride and polytetrafluoroethylene.

Inventive cathodes may comprise 1 to 15% by weight of binder(s), referring to electrode active material. In other embodiments, inventive cathodes may comprise 0.1 up to less than 1% by weight of binder(s).

A further aspect of the present invention is a battery, containing at least one cathode comprising inventive electrode active material, carbon, and binder, at least one anode, and at least one electrolyte.

Embodiments of inventive cathodes have been described above in detail.

Said anode may contain at least one anode active material, such as carbon (graphite), $TiO_2$, lithium titanium oxide, silicon or tin. Said anode may additionally contain a current collector, for example a metal foil such as a copper foil.

Said electrolyte may comprise at least one non-aqueous solvent, at least one electrolyte salt and, optionally, additives.

Non-aqueous solvents for electrolytes can be liquid or solid at room temperature and is preferably selected from among polymers, cyclic or acyclic ethers, cyclic and acyclic acetals and cyclic or acyclic organic carbonates.

Examples of suitable polymers are, in particular, polyalkylene glycols, preferably poly-$C_1$-$C_4$-alkylene glycols and in particular polyethylene glycols. Polyethylene glycols can here comprise up to 20 mol-% of one or more $C_1$-$C_4$-alkylene glycols. Polyalkylene glycols are preferably polyalkylene glycols having two methyl or ethyl end caps.

The molecular weight $M_w$ of suitable polyalkylene glycols and in particular suitable polyethylene glycols can be at least 400 g/mol.

The molecular weight $M_w$ of suitable polyalkylene glycols and in particular suitable polyethylene glycols can be up to 5 000 000 g/mol, preferably up to 2 000 000 g/mol.

Examples of suitable acyclic ethers are, for example, diisopropyl ether, di-n-butyl ether, 1,2-dimethoxyethane, 1,2-diethoxyethane, with preference being given to 1,2-dimethoxyethane.

Examples of suitable cyclic ethers are tetrahydrofuran and 1,4-dioxane.

Examples of suitable acyclic acetals are, for example, dimethoxymethane, diethoxymethane, 1,1-dimethoxyethane and 1,1-diethoxyethane.

Examples of suitable cyclic acetals are 1,3-dioxane and in particular 1,3-dioxolane.

Examples of suitable acyclic organic carbonates are dimethyl carbonate, ethyl methyl carbonate and diethyl carbonate.

Examples of suitable cyclic organic carbonates are compounds according to the general formulae (II) and (III)

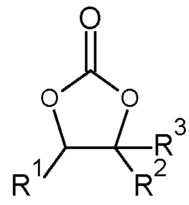

(II)

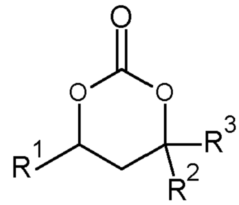

(III)

where $R^1$, $R^2$ and $R^3$ can be identical or different and are selected from among hydrogen and $C_1$-$C_4$-alkyl, for example methyl, ethyl, n-propyl, isopropyl, n-butyl, isobutyl, sec-butyl and tert-butyl, with $R^2$ and $R^3$ preferably not both being tert-butyl.

In particularly preferred embodiments, $R^1$ is methyl and $R^2$ and $R^3$ are each hydrogen, or $R^1$, $R^2$ and $R^3$ are each hydrogen. In another embodiment, $R^1$ is fluorine and $R^2$ and $R^3$ are each hydrogen.

Another preferred cyclic organic carbonate is vinylene carbonate, formula (IV).

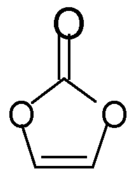

(IV)

The solvent or solvents is/are preferably used in the water-free state, i.e. with a water content in the range from 1 ppm to 0.1% by weight, which can be determined, for example, by Karl-Fischer titration.

Electrolyte further comprises at least one electrolyte salt. Suitable electrolyte salts are, in particular, lithium salts. Examples of suitable lithium salts are $LiPF_6$, $LiBF_4$, $LiClO_4$, $LiAsF_6$, $LiCF_3SO_3$, $LiC(C_nF_{2n+1}SO_2)_3$, lithium imides such as $LiN(C_nF_{2n+1}SO_2)_2$, where n is an integer in the range from 1 to 20, $LiN(SO_2F)_2$, $Li_2SiF_6$, $LiSbF_6$, $LiAlCl_4$ and salts of the general formula $(C_nF_{2n+1}SO_2)_tYLi$, where m is defined as follows:

t = 1, when Y is selected from among oxygen and sulfur,
t = 2, when Y is selected from among nitrogen and phosphorus, and
t = 3, when Y is selected from among carbon and silicon.

Preferred electrolyte salts are selected from among $LiC(CF_3SO_2)_3$, $LiN(CF_3SO_2)_2$, $LiPF_6$, $LiBF_4$, $LiClO_4$, with particular preference being given to $LiPF_6$ and $LiN(CF_3SO_2)_2$.

In one embodiment of the present invention, batteries according to the invention comprise one or more separators by means of which the electrodes are mechanically separated. Suitable separators are polymer films, in particular porous polymer films, which are unreactive toward metallic lithium. Particularly suitable materials for separators are polyolefins, in particular film-forming porous polyethylene and film-forming porous polypropylene.

Separators composed of polyolefin, in particular polyethylene or polypropylene, can have a porosity in the range from 35 to 45%. Suitable pore diameters are, for example, in the range from 30 to 500 nm.

In another embodiment of the present invention, separators can be selected from among PET nonwovens filled with inorganic particles. Such separators can have porosities in the range from 40 to 55%. Suitable pore diameters are, for example, in the range from 80 to 750 nm.

Batteries according to the invention further comprise a housing which can have any shape, for example cuboidal or the shape of a cylindrical disk or a cylindrical can. In one variant, a metal foil configured as a pouch is used as housing.

Batteries according to the invention display a good discharge behavior, for example at low temperatures (zero °C or below, for example down to -10 °C or even less), a very good discharge and cycling behavior.

Batteries according to the invention can comprise two or more electrochemical cells that combined with one another, for example can be connected in series or connected in parallel. Connection in series is preferred. In batteries according to the present invention, at least one of the electrochemical cells contains at least one cathode according to the invention. Preferably, in electrochemical cells according to the present invention, the majority of the electrochemical cells contains a cathode according to the present invention. Even more preferably, in batteries according to the present invention all the electrochemical cells contain cathodes according to the present invention.

The present invention further provides for the use of batteries according to the invention in appliances, in

particular in mobile appliances. Examples of mobile appliances are vehicles, for example automobiles, bicycles, aircrafts or water vehicles such as boats or ships. Other examples of mobile appliances are those which move manually, for example computers, especially lap-tops, telephones or electric hand tools, for example in the building sector, especially drills, battery-powered screwdrivers or battery-powered staplers.

The present invention is further illustrated by the following working examples.

Average particle diameters (D50) were determined by dynamic light scattering ("DLS"). Percentages are % by weight unless specifically noted otherwise.

$LiOH \cdot H_2O$ was purchased from Rockwood Lithium.

The invention is further illustrated by working examples.

I. Manufacture of inventive mixtures

Step (a.1)

A stirred tank reactor was filled with deionized water and tempered to 45°C. Then, a pH value of 11.3 was adjusted by adding an aqueous sodium hydroxide solution. The co-precipitation reaction was started by simultaneously feeding an aqueous transition metal sulfate solution and aqueous sodium hydroxide solution at a flow rate ratio of 1.9, and a total flow rate resulting in an average residence time of 12 hours. The transition metal solution contained Ni and Mn at a molar ratio of 1 : 2 and a total transition metal concentration of 1.65 mol/kg. The aqueous sodium hydroxide solution was a 50 wt.% sodium hydroxide solution. The pH value was kept at 11.3 by the separate feed of the aqueous sodium hydroxide solution. Beginning with the start-up of all feeds, mother liquor was removed continuously. The mixed transition metal (TM) oxyhydroxide precursor TM-OH.1 was obtained by filtration of the resulting suspension, washing with distilled water, drying at 120°C in air and sieving.

The precursor TM-OH.1 was mixed with $Li_2CO_3$ in a Li/(TM) molar ratio of 1.36. The mixture was heated to 950°C and kept for 5 hours in a forced flow of a mixture of 20% oxygen and 80% nitrogen (by volume). After cooling to ambient temperature, the powder was deagglomerated and sieved through a 32 $\mu$m mesh to obtain a base material.

A tank reactor with a magnetic stirrer was charged with one kg of the base material. 25.5 g of $Al_2(SO_4)_3$ were dissolved in 4 liters of 0.1 M $H_2SO_4$, diluted with one liter of water and added to the base material. The resultant slurry was stirred for 30 minutes at ambient temperature. Then, the liquid phase was removed by filtration. The filter cake was rinsed with 4 liters of water. The resultant filter cake was dried in vacuo at 120°C for 12 hours and then thermally treated in an electrical furnace at 400°C in an atmosphere of 60% by volume of oxygen (rest: nitrogen) for 5 hours and then cooled down to ambient temperature and sieved through a 32 $\mu$m mesh to obtain a cathode active material ($\alpha$.1), average particle diameter (d50): 5.90 $\mu$m.

Step (b.1):

A stirred tank reactor was filled with deionized water and tempered to 55°C. Then, a pH value of 8.05 was adjusted by adding an aqueous sodium hydroxide solution. The co-precipitation reaction was started by simultaneously feeding an aqueous transition metal sulfate solution and aqueous sodium carbonate solution at a flow rate ratio of 1.3, and a total flow rate resulting in an average residence time of 13.5 hours. The transition metal solution contained Ni and Mn at a molar ratio of 1 : 2 and a total transition metal concentration of 1.65 mol/kg. The aqueous sodium carbonate solution was a 27 wt.% sodium carbonate solution. The pH value was kept at 8.05 by the separate feed of the aqueous sodium carbonate solution. Beginning with the start-up of all feeds, mother liquor was removed continuously. The mixed transition metal (TM) carbonate precursor was obtained by filtration of the resulting suspension, washing with distilled water, drying at 120°C in air and sieving. A precursor was obtained, $TM\text{-}CO_3$.1.

The precursor $TM\text{-}CO_3$.1 was mixed with $Li_2CO_3$ in a Li/(TM) molar ratio of 1.30. The mixture was heated to 930°C and kept for 5 hours in a forced flow of a mixture of 20% oxygen and 80% nitrogen (by volume). After cooling to ambient temperature, the powder was deagglomerated and sieved through a 32 $\mu$m mesh to obtain a base material.

A tank reactor with a magnetic stirrer was charged with one kg of the base material. 38.2 g of $Al_2(SO_4)_3$ were dissolved in 1 liter of water and added to the base material. The resultant slurry was stirred for 30 minutes at ambient temperature. Then, the liquid phase was removed by filtration. The filter cake was rinsed with 3.5 liters of water. The resultant filter cake was dried in vacuo at 120°C for 12 hours and then thermally treated in an electrical furnace at 400°C in an atmosphere of 60% by volume of oxygen (rest: nitrogen) for 5 hours and then cooled down to ambient temperature and sieved through a 32 $\mu$m mesh to obtain a cathode active material ($\beta$.1).

Step (c.1) to step (c.3):

In a laboratory benchtop mixer, cathode active material ($\alpha$.1) and cathode active material ($\beta$.1) were blended with

different ratios, see Table 1.

Table 1: Physical properties:

| Cathode active material | (α.1) [%] | (β) [%] | BET Surface Area [$m^2/g$] | Tap Density [$g/cm^3$] | Press Density [$g/cm^3$] | D50 [μm] |
|---|---|---|---|---|---|---|
| Pristine (α.1) | 100 | 0 | 5.23 | 1.66 | 2.99 | 5.51 |
| Pristine (β.1) | 0 | 100 | 5.64 | 1.81 | 2.64 | 5.90 |
| Mixture 1 | 70 | 30 | 5.09 | 1.70 | 2.88 | 5.52 |
| Mixture 2 | 50 | 50 | 5.56 | 1.73 | 2.83 | 5.65 |
| Mixture 3 | 30 | 70 | 5.57 | 1.73 | 2.77 | 5.71 |
| Percentages refer to percent by weight. | | | | | | |

II. Testing of Cathode Active Materials

II.1 Electrode manufacture, general procedure

Positive electrode: PVDF binder (Solef® 5130) was dissolved in NMP (Merck) to produce a 10 wt.% solution. For electrode preparation, binder solution (3.5 wt.%), graphite (KS6, 2 wt.%), and carbon black (Super C65, 2 wt.-%) were suspended in NMP. After mixing using a planetary centrifugal mixer (ARE-250, Thinky Corp.; Japan), either any of inventive Mixtures 1 to 3 or a pristine cathode active material as comparative material (92.5 wt.%) was added and the suspension was mixed again to obtain a lump-free slurry. The solid content of the slurry was adjusted to 62.3%. The slurry was coated onto Al foil using a Erichsen auto coater. Prior to further use, all electrodes were calendered. The thickness of cathode material was 38 μm, corresponding to 9 $mg/cm^2$. All electrodes were dried at 105°C for 12 hours before battery assembly.

II.2: Electrolyte Manufacture

A base electrolyte composition EL base 1 was prepared containing 1M $LiPF_6$, 1:4 (w/w) fluoroethylene carbonate : diethyl carbonate.

II.3 Coin-type Half Cell Manufacture

Coin-type half cells (20 mm in diameter and 3.2 mm in thickness) comprising a cathode prepared as described under II.1 and lithium metal as working and counter electrode, respectively, were assembled and sealed in an Ar-filled glove box. In addition, the cathode and anode and a separator were superposed in order of cathode // separator // Li foil to produce a half coin cell. Thereafter, 0.15 mL of the EL base 1 according to (II.2) were introduced into the coin cell.

III. Evaluation of cell performance

Evaluation of coin half-cell performance

Cell performance were evaluated using the produced coin type battery. For the battery performances, initial capacity and reaction resistance of cell were measured.

The initial performance and cycle were measured as follows: Coin half cells according to II.3 were tested in a voltage range between 4.8 V to 2.0 V at room temperature. For the initial cycles, the initial lithiation was conducted in the CC-CV mode, i.e., a constant current (CC) of 0.067 C was applied until reaching 0.01 C. After 5 min resting time, reductive lithiation was carried out at constant current of 0.067 C up to 2.0 V. The results are summarized in Table 2.

Improved cycle life performance was observed in Mixture 1, Mixture 2 and Mixture 3.

Improved energy density was observed in Mixture 3.

The improved cycle life performance of Mixtures 1 to 3 outweighs the higher energy density of pristine (α.1).

## Claims

1. Process for making an electrode active material for lithium-ion batteries wherein said process comprises the steps of:

   (a) Providing a cathode active material (α) that has the general formula $Li_{1x1}TM_{1x1}O_2$ wherein TM is a combination of metals according to general formula (I), and x1 is in the range of from 0.05 to 0.3, and wherein cathode active material (α) has a pressed density in the range of from 2.85 to 3.1 g/cm$^3$, determined at 250 MPa,
   (b) providing another cathode active material (β) that has the general formula $Li_{1+x2}TM_{1-x2}O_2$ wherein TM is a combination of metals according to general formula (I), and wherein TM in cathode material (α) and cathode active material (β) may be identical or different, and x2 is in the range of from 0.05 to 0.3, and wherein cathode active material (β) has a pressed density in the range of from 2.50 to 2.80 g/cm$^3$, determined at 250 MPa,
   (c) combining cathode active material (α) and cathode active material (β) in a mass ratio in the range of from 1:5 to 5:1,

   $$(Ni_aCo_bMn_c)_{1-d}M^1_d \qquad (I)$$

   wherein

   a is in the range of from 0.30 to 0.38,
   b is in the range of from zero to 0.05,
   c is in the range of from 0.60 to 0.70, and
   d is in the range of from zero to 0.05,
   $M^1$ is selected from Al, Ti, Zr, W, Mo, Mg, B, and combinations of at least two of the foregoing,

   $$a + b + c = 1.$$

2. Process according to claim 1 wherein TM in cathode active materials (α) and (β) are the same.

3. Process according to claim 1 or 2 wherein cathode active material (α) is treated with aqueous sulfuric acid before step (c).

4. Process according to any of the preceding claims wherein cathode active material (β) is coated with a layer containing $Al_2O_3$ or a Li-Al oxide compound.

5. Process according to any of the preceding claims wherein the BET surface of cathode active material (α) is lower than the BET surface of cathode active material (β), wherein the BET surface is determined by nitrogen adsorption after outgassing of the sample at 200 °C for 30 minutes or more and beyond this accordance with DIN ISO 9277:2010.

6. Process according to any of the preceding claims wherein at least one of cathode active material (α) and (β) has an average particle diameter (D50) in the range of from 4 to 7 μm.

7. Mixture comprising

   (α) a cathode active material (α) that has the general formula $Li_{1+x1}TM_{1-x1}O_2$ wherein TM is a combination of metals according to general formula (I), and x1 is in the range of from 0.05 to 0.3, and wherein cathode active material (α) has a pressed density in the range of from 2.85 to 3.1 g/cm$^3$, determined at 250 MPa,
   (β) cathode active material (β) that has the general formula $Li_{1+x2}TM_{1x2}O_2$ wherein TM is a combination of metals according to general formula (I), and wherein TM in cathode material (α) and cathode active material (β) may be identical or different, and x2 is in the range of from 0.05 to 0.3, and wherein cathode active material (β) has a pressed density in the range of from 2.50 to 2.80 g/cm$^3$, determined at 250 MPa,
   in a weight ratio in the range of from 1:5 to 5:1,

   $$(Ni_aCo_bMn_c)_{1-d}M^1_d \qquad (I)$$

   wherein

a is in the range of from 0.30 to 0.38,
b is in the range of from zero to 0.05,
c is in the range of from 0.60 to 0.70, and
d is in the range of from zero to 0.05,
$M^1$ is selected from Al, Ti, Zr, W, Mo, Mg, B, and combinations of at least two of the foregoing,

$$a + b + c = 1.$$

**8.** Mixture according to claim 7 wherein TM in cathode active materials ($\alpha$) and ($\beta$) are the same.

**9.** Mixture according to claim 7 or 8 wherein the BET surface of cathode active material ($\alpha$) is lower than the BET surface of cathode active material ($\beta$) wherein determined by nitrogen adsorption after outgassing of the sample at 200 °C for 30 minutes or more and beyond this accordance with DIN ISO 9277:2010.

**10.** Mixture according to any of the claims 7 to 9 wherein at least one of cathode active material ($\alpha$) and ($\beta$) has an average particle diameter (D50) in the range of from 4 to 7 $\mu$m.

**11.** Mixture according to any of the claims 7 to 10 wherein cathode active material ($\beta$) is coated with a layer containing $Al_2O_3$ or a Li-Al oxide compound.

**12.** Cathode comprising

(A) at least one mixture according to any of the claims 7 to 10,
(B) carbon in electrically conductive form, and
(C) a binder polymer.

**13.** Electrochemical cell comprising at least one cathode according to claim 12.

## Patentansprüche

**1.** Verfahren zur Herstellung eines Elektroden-Aktivmaterials für Lithium-Ionen-Batterien, wobei dieser Prozess die folgenden Schritte umfasst:

(a) Indem ein kathodenaktives Material ($\alpha$) bereitgestellt wird, das die allgemeine Formel $Li_{1+x1}TM_{1-x1}O_2$ hat, wobei TM eine Kombination von Metallen nach der allgemeinen Formel (I) ist, x1 im Bereich von 0,05 bis 0,3 liegt und das kathodenaktive Material ($\alpha$) eine Pressdichte im Bereich von 2,85 bis 3,1 g/cm$^3$ aufweist, bestimmt bei 250 MPa,
(b) womit ein weiteres kathodenaktives Material ($\beta$) mit der allgemeinen Formel $Li_{1+x2}TM_{1-x2}O_2$ bereitgestellt wird, wobei TM eine Kombination von Metallen gemäß der allgemeinen Formel (I) ist und TM im Kathodenmaterial ($\alpha$) und kathodenaktives Material ($\beta$) identisch oder unterschiedlich sein können, x2 im Bereich von 0,05 bis 0,3 liegt und bei dem das kathodenaktive Material ($\beta$) eine Pressdichte im Bereich von 2,50 bis 2,80 g/cm$^3$ aufweist, bestimmt bei 250 MPa,
(c) indem kathodenaktives Material ($\alpha$) und kathodenaktives Material ($\beta$) in einem Massenverhältnis im Bereich von 1:5 bis 5:1 kombiniert wird,

$$(Ni_aCo_bMn_c)_{1-d}M^1_d \qquad (I)$$

wobei

a liegt im Bereich von 0,30 bis 0,38,
b liegt im Bereich von null bis 0,05,
c liegt im Bereich von 0,60 bis 0,70, und
d liegt im Bereich von null bis 0,05,
M1 wird aus Al, Ti, Zr, W, Mo, Mg, B und Kombinationen von mindestens zwei der oben genannten ausgewählt,

$$a + b + c = 1.$$

**2.** Prozess gemäß Anspruch 1, bei dem TM in kathodenaktiven Materialien (α) und (β) gleich sind.

**3.** Prozess gemäß Anspruch 1 oder 2, bei dem das kathodenwirksame Material (α) vor Schritt (c) mit wässriger Schwefelsäure behandelt wird.

**4.** Prozess gemäß einer der vorherigen Ansprüche, bei denen das kathodenaktive Material (β) mit einer Schicht beschichtet ist, die $Al_2O_3$ oder eine Li-Al-Oxidverbindung enthält.

**5.** Prozess gemäß einer der vorherigen Ansprüche, bei dem die BET-Oberfläche des kathodenaktiven Materials (α) niedriger ist als die BET-Oberfläche des kathodenaktiven Materials (β), wobei die BET-Oberfläche durch Stickstoffadsorption nach dem Ausgasen der Probe bei 200 °C für 30 Minuten oder mehr und darüber hinaus gemäß DIN ISO 9277:2010 bestimmt wird.

**6.** Prozess gemäß einer der vorherigen Behauptungen, bei denen mindestens eines der aktiven Kathoden (α) und (β) einen durchschnittlichen Partikeldurchmesser (D50) im Bereich von 4 bis 7 μm hat.

**7.** Gemisch enthaltend

(α) ein kathodenaktives Material (α), das die allgemeine Formel $Li_{1+x1}TM_{1-x1}O_2$ aufweist, wobei TM eine Kombination von Metallen gemäß der allgemeinen Formel (I) ist und x1 im Bereich von 0,05 bis 0,3 liegt und bei dem das aktive Kathodenmaterial (α) eine Pressdichte im Bereich von 2,85 bis 3,1 $g/cm^3$ aufweist, bestimmt bei 250 MPa,
(β) Kathodenaktivmaterial (β), das die allgemeine Formel $Li_{1+x2}TM_{1-x2}O_2$ aufweist, wobei TM eine Kombination von Metallen gemäß der allgemeinen Formel (I) ist, wobei TM im Kathodenmaterial (α) und Kathodenaktivmaterial (β) identisch oder unterschiedlich sein können, und x2 im Bereich von 0,05 bis 0,3 liegt und bei dem das aktive Kathodenmaterial (β) eine Pressdichte im Bereich von 2,50 bis 2,80 $g/cm^3$ aufweist, bestimmt bei 250 MPa, in einem Gewichtsverhältnis im Bereich von 1:5 bis 5:1,

$$(Ni_aCo_bMn_c)_{1-d}M^1_d \qquad (I)$$

wobei

a liegt im Bereich von 0,30 bis 0,38,
b liegt im Bereich von null bis 0,05,
c liegt im Bereich von 0,60 bis 0,70, und
d liegt im Bereich von null bis 0,05,
M1 wird aus Al, Ti, Zr, W, Mo, Mg, B und Kombinationen von mindestens zwei der oben genannten ausgewählt,

$$a + b + c = 1.$$

**8.** Mischung gemäß Anspruch 7, wobei TM in kathodenaktiven Materialien (α) und (β) gleich sind.

**9.** Mischung gemäß Anspruch 7 oder 8, bei der die BET-Oberfläche des kathodenaktiven Materials (α) niedriger ist als die BET-Oberfläche des kathodenaktiven Materials (β), bei der durch Stickstoffadsorption nach dem Ausgasen der Probe bei 200 °C für 30 Minuten oder mehr und darüber hinaus gemäß DIN ISO 9277:2010 bestimmt wird.

**10.** Eine Mischung gemäß einer der Ansprüche 7 bis 9, bei der mindestens eines der aktiven Kathoden (α) und (β) einen durchschnittlichen Partikeldurchmesser (D50) im Bereich von 4 bis 7 μm aufweist.

**11.** Eine Mischung gemäß einer der Ansprüche 7 bis 10, bei der das aktive Kathodenmaterial (β) mit einer Schicht beschichtet ist, die $Al_2O_3$ oder eine Li-Al-Oxidverbindung enthält.

**12.** Kathode bestehend aus

(A) mindestens eine Mischung gemäß einer der Behauptungen 7 bis 10,
(B) Kohlenstoff in elektrisch leitfähiger Form, und
(C) Ein Bindemittelpolymer.

**13.** Elektrochemische Zelle, die laut Behauptung 12 mindestens eine Kathode umfasst.

**Revendications**

**1.** Procédé de fabrication d'un matériau actif d'électrode pour batteries lithium-ion, dans lequel ce procédé comprend les étapes suivantes :

(a) En fournissant un matériau actif cathodique ($\alpha$) ayant la formule générale $Li_{1+x1}TM_{1-x1}O_2$ où TM est une combinaison de métaux selon la formule générale (I), et x1 est dans la plage de 0,05 à 0,3, et où le matériau actif cathodique ($\alpha$) a une densité pressée allant de 2,85 à 3,1 g/cm$^3$, déterminé à 250 MPa,
(b) fournissant un autre matériau actif cathodique ($\beta$) ayant la formule générale $Li_{1+x2}TM_{1-x2}O_2$ où TM est une combinaison de métaux selon la formule générale (I), et où TM dans le matériau cathodique ($\alpha$) et le matériau actif cathodique ($\beta$) peuvent être identiques ou différents, et x2 est dans la plage de 0,05 à 0,3, et où le matériau actif cathodique ($\beta$) a une densité comprimée allant de 2,50 à 2,80 g/cm$^3$, déterminé à 250 MPa,
(c) Combinant le matériau actif cathodique ($\alpha$) et le matériau actif cathodique ($\beta$) dans un rapport de masse allant de 1:5 à 5:1,

$$(Ni_aCo_bMn_c)_{1-d}M^1{}_d \qquad (I)$$

où

a est dans la plage de 0,30 à 0,38,
b est dans l'intervalle de zéro à 0,05,
c est dans l'intervalle de 0,60 à 0,70, et
d est dans l'intervalle de zéro à 0,05,
$M^1$ est sélectionné parmi Al, Ti, Zr, W, Mo, Mg, B, et des combinaisons d'au moins deux des précédents,

$$a + b + c = 1.$$

**2.** Le procédé selon l'affirmation 1 où TM dans les matériaux actifs cathodiques ($\alpha$) et ($\beta$) sont identiques.

**3.** Procédé selon la revendication 1 ou 2, dans lequel la matière active cathodique ($\alpha$) est traitée avec de l'acide sulfurique aqueux avant l'étape (c).

**4.** Procédé selon l'une des affirmations précédentes où la matière active cathodique ($\beta$) est recouverte d'une couche contenant de l'$Al_2O_3$ ou d'un composé d'oxyde de Li-Al.

**5.** Procédé selon l'une des affirmations précédentes où la surface BET du matériau actif cathodique ($\alpha$) est inférieure à la surface BET du matériau actif cathodique ($\beta$), où la surface BET est déterminée par adsorption d'azote après un dégazage de l'échantillon à 200 °C pendant 30 minutes ou plus et au-delà de cette mesure conforme à la norme DIN ISO 9277:2010.

**6.** Un procédé selon l'une des affirmations précédentes où au moins une matière active cathodique ($\alpha$) et ($\beta$) a un diamètre moyen de particule (D50) dans l'intervalle de 4 à 7 $\mu$m.

**7.** Mélange comprenant

($\alpha$) un matériau actif à cathode ($\alpha$) dont la formule générale est $Li_{1+x1}TM_{1-x1}O_2$ où TM est une combinaison de métaux selon la formule générale (I), et x1 est dans la plage de 0,05 à 0,3, et où le matériau actif cathodique ($\alpha$) a une densité comprimée allant de 2,85 à 3,1 g/cm$^3$, déterminé à 250 MPa,
($\beta$) matière active cathodique ($\beta$) qui possède la formule générale $Li_{1+x2}TM_{1-x2}O_2$ où TM est une combinaison de métaux selon la formule générale (I), et où TM dans le matériau cathodique ($\alpha$) et le matériau actif cathodique ($\beta$)

peuvent être identiques ou différents, et x2 est dans la plage de 0,05 à 0,3, et où le matériau actif cathodique (β) a une densité comprimée allant de 2,50 à 2,80 g/cm$^3$, déterminé à 250 MPa,
dans un rapport de poids allant de 1:5 à 5:1,

$$(Ni_aCo_bMn_c)_{1-d}M^1{}_d \qquad (I)$$

où

a est dans la plage de 0,30 à 0,38,
b est dans l'intervalle de zéro à 0,05,
c est dans l'intervalle de 0,60 à 0,70, et
d est dans l'intervalle de zéro à 0,05,
$M^1$ est sélectionné parmi Al, Ti, Zr, W, Mo, Mg, B, et des combinaisons d'au moins deux des précédents,

$$a + b + c = 1.$$

**8.** Le mélange selon la revendication 7, où la TM dans les matériaux actifs cathodiques (α) et (β) est la même.

**9.** Mélange selon la revendication 7 ou 8, où la surface BET du matériau actif cathodique (α) est inférieure à la surface BET du matériau actif cathodique (β), déterminée par adsorption d'azote après dégazage de l'échantillon à 200 °C pendant 30 minutes ou plus, et au-delà conformément à la norme DIN ISO 9277:2010.

**10.** Mélange selon l'une des revendications 7 à 9, où au moins une matière active cathodique (α) et (β) a un diamètre moyen de particule (D50) dans la plage de 4 à 7 μm.

**11.** Mélange selon l'une des revendications 7 à 10, dans lequel la matière active cathodique (β) est recouverte d'une couche contenant de l'$Al_2O_3$ ou un composé d'oxyde de Li-Al.

**12.** Cathode comprenant

(A) au moins un mélange selon l'une des revendications 7 à 10,
(B) le carbone sous forme électriquement conductrice, et
(C) un polymère liant.

**13.** Cellule électrochimique comprenant au moins une cathode selon la revendication 12.

Figure 1: Press density:

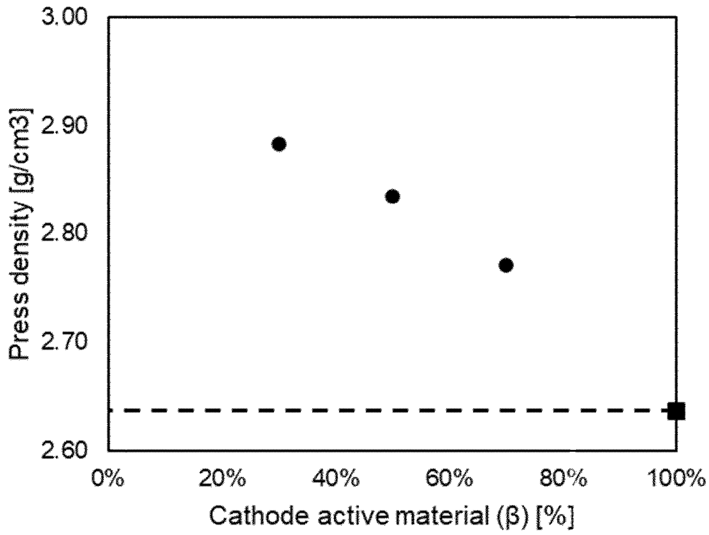


Figure 2: Volumetric energy density:

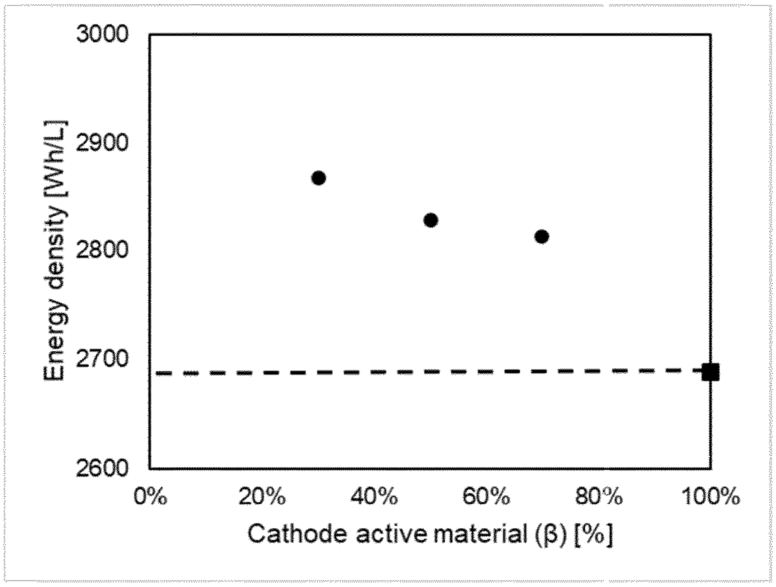

Figure 3: Cycling capacity retention after 100 cycles:

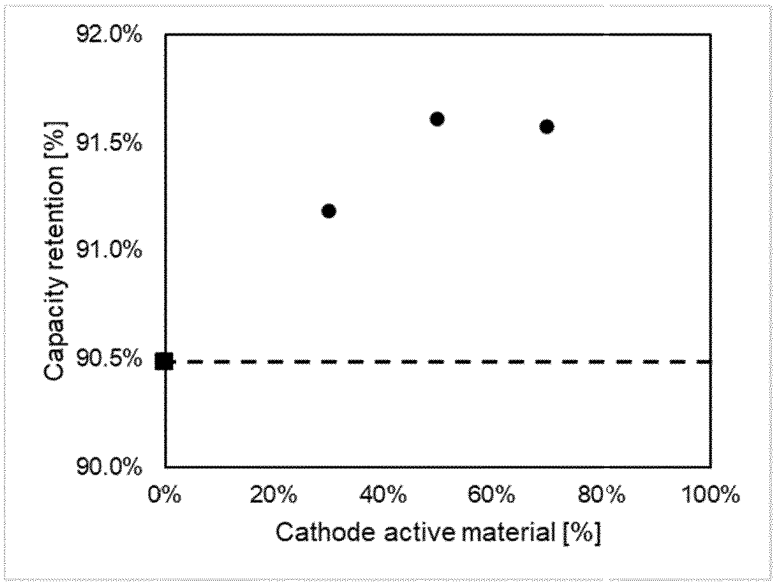

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 3486980 A
- WO 2021037678 A